# EUROPEAN PATENT SPECIFICATION

(11) **EP 2 094 968 B1**
(45) Date of publication and mention of the grant of the patent: **02.10.2013**
(21) Application number: 07866296.2
(22) Date of filing: 20.12.2007
(51) Int. Cl.: F03D 1/06, F03D 11/02

(54) **A WIND TURBINE COMPRISING A TORSIONAL VIBRATION ABSORBER**
WINDTURBINE MIT TORSIONALEM SCHWINGUNGSDÄMPFER
ÉOLIENNE ÉQUIPÉE D'UN ABSORBEUR DE VIBRATIONS DE TORSION

(30) Priority: 20.12.2006 DK 200601683
(43) Date of publication of application: 02.09.2009
(73) Proprietor: Vestas Wind Systems A/S, 8200 Aarhus N (DK)
(72) Inventor: MIRANDA, Erik Carl Lehnskov, 8940 Randers SV (DK)
(74) Representative: Inspicos A/S
(86) International application number: PCT/EP2007/064333
(87) International publication number: WO 2008/074866

(56) References cited:
- EP-A- 1 293 657
- WO-A-2007/119953
- WO-A-2007/140787
- US-A- 3 667 214
- US-A- 4 774 855
- US-B1- 6 290 620

## Description

### Technical field

The present invention relates to a wind turbine, and more particularly to improvements to the transmission system of the wind turbine. Embodiments of the invention address problems related to torsional vibrations. Reference is made for example to US-A-4 774 855, which also address the same problems related to torsional vibrations.

### Summary of the invention

Whereas significant improvements have been made in the development of transmission systems for wind turbines, problems remain with regard to lifetime of mechanical drive elements, such as gears, and with regard to torsional vibrations in the transmission system.

The present inventor has found that forces in the transmission system deriving from e.g. aerodynamic forces acting on the rotor blades of the wind turbine may excite torsional vibrations in the transmissions system. One particular problem exists in connection with torque reversals which result form sudden impacts in the transmission system of the wind turbine, e.g. during start-up of the wind turbine. As a consequence of excited torsional vibrations, undesired loads are imparted on the drive elements of the transmission system. Hence, it is an object of preferred embodiments of the invention to provide improvements to the transmission system of a wind turbine, which reduces torsional vibrations in the transmission system.

The invention accordingly provides a wind turbine comprising:
- a wind-driven rotor for converting wind energy to a mechanical driving force;
- a power converter for converting the driving force to exploitable power;
- a transmission system for rotatably transmitting the driving force to the power converter, the transmission system comprising at least one rotatable driving element;
wherein the transmission system further comprises a torsional dampening device having the features as further defined in claim 2.

The invention additionally provides a use of a torsional dampening device for dampening torsional vibrations as defined in claim 1.

The torsional dampening device is in preferred embodiments especially suitable for dampening low frequency torsional vibrations. Typically, low frequency torsional vibrations are vibrations having a frequency below 10 Hz, such as below 7 Hz, such as below 4 Hz, such as 0.5 - 2 Hz.

The inertia element of the torsional dampening device is connected to the at least one rotatable driving element in such a way that it dampens torsional vibrations in the rotatable driving element during operation of the wind turbine. This may be done by transferring torsional vibrations from the driving element to the torsional dampening device e.g. by adapting the eigenfrequency of the torsional dampening device to the frequency of the torsional vibrations in the rotatable driving element so that the rotatable inertia element of the dampening device is excited if torsional vibrations occur. Hence, energy is transferred from the rotatable driving element to the inertia element and dissipated through dampening.

The power converter may include a generator for converting the mechanical driving force to electricity. It should, however, be understood that the power converter may also include a mechanical system, e.g. a gear system, for further transmission of mechanical driving force.

The at least one driving element may include any shaft, gear or other rotatable element in the transmission system, through which a mechanical driving force is transmitted.

In the present context, the term frequency may designate a frequency measured in vibrations per second (Hz) and/or an angular velocity measured in radians per second.

In order to be able to dampen torsional vibrations in the driving element, the rotatable inertia element may be connected to the driving element by at least one dampening element having elastic, viscous or viscoelastic properties.

In one embodiment, the rotatable inertia element may comprise an annular member arranged coaxially with the at least one rotatable driving element, the annular member having an inner diameter which is larger than an outer diameter of the driving element, and wherein the driving element is connected to the inertia element by means of said dampening element, the dampening element contacting or being connected to an outer circumferential surface of the driving element and to an inner surface of the annular member.

As an example, the annular member may be a metal ring arranged coaxially with a driving shaft of the transmission system. In the space between the annular member and the driving shaft an elastically dampening element, e.g. a number of rubber blocks may be positioned in contact with an inner surface of the annular member and in contact with an outer surface of the driving shaft. The inertia element may comprise an arbitrary number of elastically dampening elements. In preferred embodiments, the inertia element comprises 2-6 elastically dampening elements, such as rubber blocks. The rubber blocks may thus ensure that the annular member follows the rotation of the driving shaft. If torsional vibrations arise in the transmission system, the rotatable inertia element may dampen these vibrations through the rubber blocks. As an alternative to rubber blocks, blocks of e.g. latex or any other material having elastic properties, including various plastic materials, such as various types of Nylon, may be used.

The driving element may have a rotational axis which in preferred embodiments is located substantially along the central axis of a driving shaft of the transmission system. In one embodiment, the rotatable inertia element comprises a mass, which is movably accommodated in a groove in the driving element, the groove being non-parallel to the rotational axis. The inertia element may comprise an arbitrary number of masses. In preferred embodiments, the inertia element comprises 3-6 masses. One or more grooves may be formed in an annular member being arranged coaxially with the driving shaft. The number of groves is in preferred embodiments equivalent to the number of masses. The annular member may be connected to the driving shaft and may consequently rotate together with the shaft.

The rotatable inertia element may be viscous i.e. having a viscosity between 0.001 Ns/m² and 2 Ns/m² at 20°C. If torsional vibrations arise in the transmission system, the rotatable inertia element may move within the groove. Due to the viscosity of the inertia element, this movement will dampen the torsional vibrations.

Alternatively, the rotatable inertia element may be solid. A solid inertia element may likewise move within the groove, and thus dampen torsional vibrations. As a further alternative, a combination of solid and viscous elements may be provided. The dampening effect of the dampening device is i.a. influenced by the shape of the groove, the distance between the groove and the rotational axis and of the rotational speed of the driving shaft, the viscosity and/or the mass of the inertia element.

As an alternative to rotatable inertia element comprising one or more masses accommodated in one or more grooves, the rotatable inertia element may comprise at least one pendulum connected to the driving element. By pendulum is in this connection understood, a mass having an attachment structure in the form of an elongated member. The elongated member may be connected to the driving structure so that the mass moves together with the driving structure, but also allows movement of the mass relative to the driving structure. If torsional vibrations arise in the transmission system, the at least one pendulum may be excited, and energy will be transferred from the transmission system to the pendulum(s) and dissipated through dampening. The length and mass of the pendulum(s) determine the dampening characteristics.

The inertia element may comprise an arbitrary number of pendulums. In preferred embodiments, the inertia element comprises 2-6 pendulums.

As a further alternative, the wind turbine may further comprise a chamber accommodating a medium having viscous properties. The rotatable inertia element may comprises at least one baffle extending into the medium and being linked to rotate with the rotatable driving element so that torsional vibrations of the rotatable driving element are transferred to the baffle whereby they are dampened due to viscous interaction between the medium and the baffle.

In this connection a baffle is panel which is linked so that it rotates when the driving structure rotates. Linked to rotate with means that the baffle rotates when the driving structure rotates, but not necessarily with the same speed.

The baffle may be plate-shaped, fin-shaped, wing-shaped, or have another similar shape. Since the baffle extends into the medium, the medium may be rotated by the baffle.

The medium may be oil or any other medium having a viscosity between 0.001 Ns/m² and 2 Ns/m² at 20°C, thereby ensuring a sufficient friction between the at least on baffle and the medium in order to dampen torsional vibrations. When the driving element rotates at a substantially constant speed without torsional vibrations, the medium may rotate together with the driving element. If torsional vibrations arise, e.g. due to a decreased speed of the driving element, the rotation of the medium is not decreased at the same rate due to the inertia of the medium, and the viscous interaction may thus dampen the vibrations.

The driving element, e.g. the shaft may be drivably linked to the baffle through a gear. In one embodiment, the gear may comprise a bevel gear.

### Description of the drawings

Embodiments of the invention will now be further described with reference to the drawings, in which:
Fig. 1 is a schematic illustration of a wind turbine according to the invention, and
Figs. 2-5 are schematic illustrations of different embodiments of a torsional dampening device according to the invention.

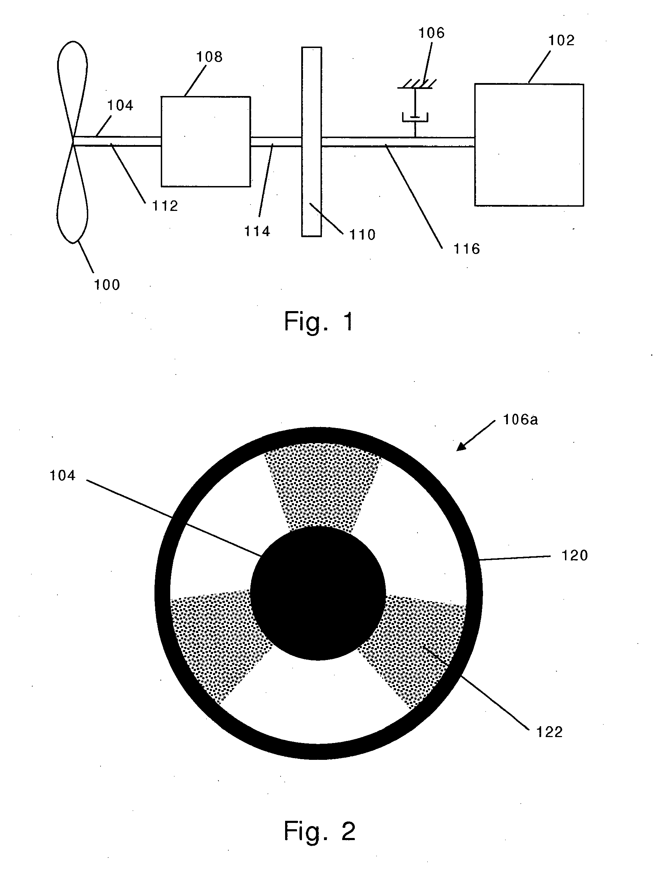

Fig. 1 is a schematic illustration of a wind turbine comprising a wind-driven rotor 100 for converting wind energy to a mechanical driving force, a power converter 102 for converting the driving force to exploitable power and a transmission system for rotatably transmitting the driving force to the power converter 102. The transmission system comprises at least one rotatable driving element, in this embodiment a driving shaft 104. Furthermore, the transmission system comprises a torsional dampening device 106, a gear 108 and a brake 110.

The torsional dampening device 106 has a rotatable inertia element (not shown in Fig. 1) which is drivable by the at least one rotatable driving element, e.g. the driving shaft 104. The inertia element may be connected to the driving shaft 104 in such a way that the inertia element dampens torsional vibrations in the rotatable driving element during operation of the wind turbine.

The rotor 100 comprises e.g. three rotor-blades. The power converter 102 may e.g. comprise a generator for converting the mechanical driving force to exploitable power, such as electricity. The driving shaft 104 may be divided into more shafts, e.g. the rotor 100 may drive an input shaft 112 for the gear 108, from which an output shaft 114 extends to the brake 110, and a downstream shaft 116 may extend from the brake to the power converter 102. In the illustrated embodiment, the torsional dampening device 106 is connected to the downstream shaft 116.

Fig. 2 is a schematic illustration of a torsional dampening device 106a comprising a rotatable inertia element which comprises an annular member 120 arranged coaxially with the driving shaft 104. The annular member 120, in this embodiment a metal ring, has an inner diameter which is larger than an outer diameter of the driving shaft 104. The driving shaft 104 is connected to the metal ring 120 by means of an elastically dampening element in the form of three rubber blocks 122. These rubber blocks 122 are all connected to the outer circumferential surface of the driving shaft 104 and to the inner surface of the metal ring 120.

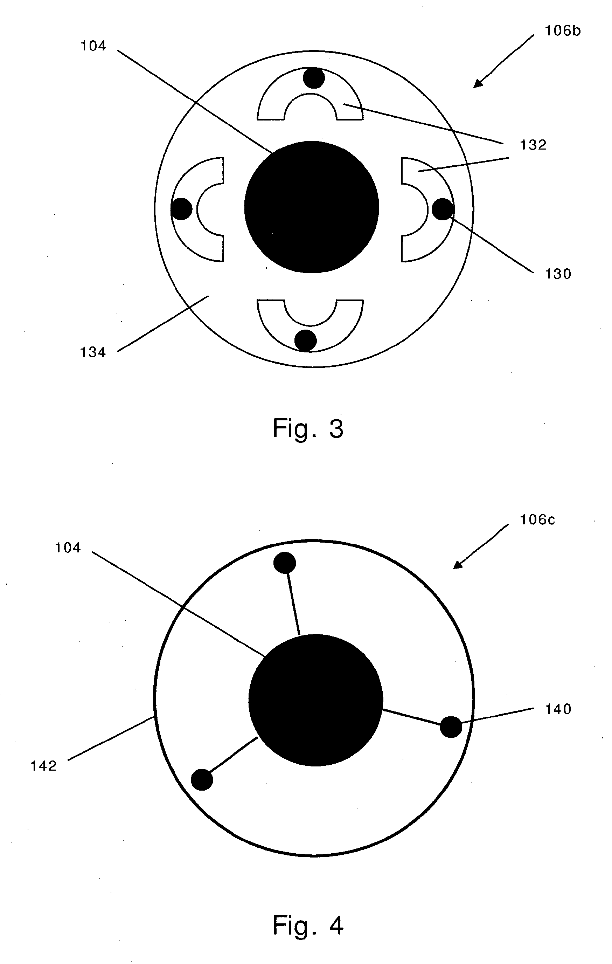

Fig. 3 is a schematic illustration of another embodiment of a torsional dampening device 1 06b being connected to the driving shaft 104 having a rotational axis being parallel to the shaft. In the illustrated embodiment, the torsional dampening device 106b comprises four masses 130 each being movably accommodated in a groove 132 in an annular member 134 being connected to the driving shaft 104 for rotation herewith. The grooves 132 are non-parallel to the rotational axis. In this embodiment, the masses 130 are solid.

Fig. 4 is a schematic illustration of a third embodiment of a torsional dampening device 1 06c being connected to the driving shaft 104. The dampening device comprises three pendulums 140 each being connected to the shaft 104. A shield 142 is provided to increase safety and in order to avoid contact with the pendulums 140 during operation of the wind turbine. The length of the pendulums is in the present embodiment in the range of 0.1 and 0.7 metres.

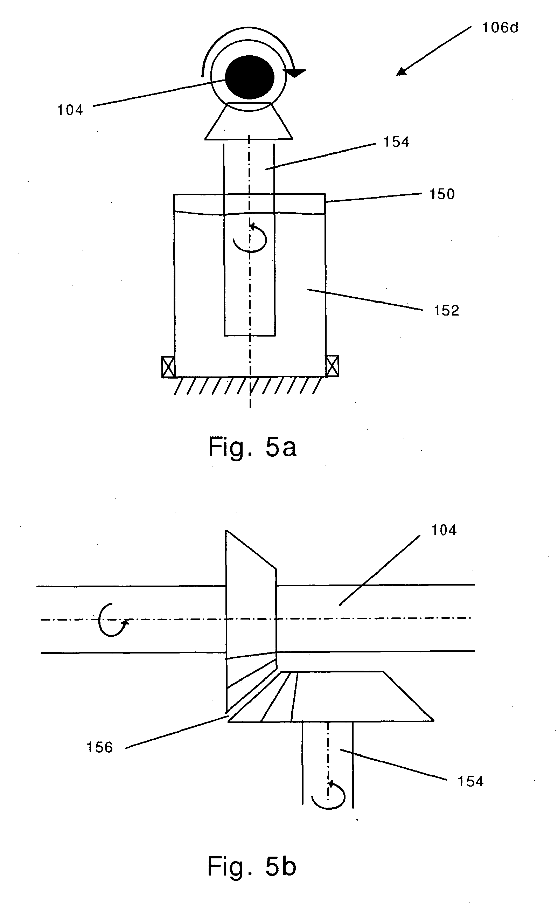

In a further alternative embodiment illustrated in Figs. 5a and 5b, the torsional dampening device 106d comprises a chamber 150 accommodating oil 152 and one baffle 154 extending into the oil 152. The torsional vibrations are dampened during operation of the wind turbine due to viscous interaction between the baffle 154 and the oil 152. The baffle 154 is drivably connected to the driving shaft 104 through a bevel gear 156, as illustrated in Fig. 5b.

## Claims

1. Use of a torsional dampening device (106) for dampening low-frequency torsional vibrations having a frequency below 10 Hz in a transmission system of a wind turbine, the wind turbine comprising a wind-driven rotor (100) for converting wind energy to a mechanical driving force, a power converter (102) for converting the driving force to exploitable power, and a transmission system for rotatably transmitting the driving force to the power converter, the transmission system comprising at least one rotatable driving element, a gear arranged between the wind-driven rotor and the power converter, wherein an output shaft (114) of the gear rotates at a higher speed than an input shaft (112) thereof, the torsional dampening device (106) having a rotatable inertia element which is drivable by the at least one rotatable driving element, and the inertia element being connected in such a way to the at least one rotatable driving element that the inertia element dampens torsional vibrations in the rotatable driving element during operation of the wind turbine, wherein the torsional dampening device (106) is arranged between the gear (108) and the power converter (102).

2. A wind turbine comprising:
- a wind-driven rotor (100) for converting wind energy to a mechanical driving force;
- a power converter (102) for converting the driving force to exploitable power;
- a transmission system for rotatably transmitting the driving force to the power converter, the transmission system comprising at least one rotatable driving element (104);
- a gear (108) arranged between the wind-driven rotor and the power converter, wherein an output shaft of the gear rotates at a higher speed than an input shaft thereof, wherein the transmission system further comprises a torsional dampening device (106) having a rotatable inertia element which is drivable by the at least one rotatable driving element, and in that the inertia element is connected in such a way to the at least one rotatable driving element that the inertia element dampens torsional vibrations in the rotatable driving element during operation of the wind turbine, wherein:
- the torsional dampening device (106) is arranged between the gear and the power converter, and wherein
- the torsional dampening device (106) is configured to dampen low-frequency torsional vibrations having a frequency below 10 Hz.

3. The wind turbine of claim 2, wherein the rotatable inertia element is connected to the driving element by at least one dampening element having elastic, viscous or viscoelastic properties.

4. The wind turbine of claim 3, wherein the rotatable inertia element comprises an annular member arranged coaxially with the at least one rotatable driving element, the annular member having an inner diameter which is larger than an outer diameter of the driving element, and wherein the driving element is connected to the inertia element by means of said dampening element, the dampening element contacting or being connected to an outer circumferential surface of the driving element and to an inner surface of the annular member.

5. The wind turbine of any of claims 2-4, wherein the driving element has a rotational axis, and wherein the rotatable inertia element comprises a mass, which is movably accommodated in a groove in the driving element, the groove being non-parallel to the rotational axis.

6. The wind turbine of claim 5, wherein the rotatable element is viscous.

7. The wind turbine of claim 5, wherein the rotatable element is solid.

8. The wind turbine of any of claims 2-4, wherein the rotatable inertia element comprises at least one pendulum.

9. The wind turbine of claim 2, further comprising a chamber accommodating a medium having viscous properties, and wherein the rotatable inertia element comprises at least one baffle extending into the medium and being linked to rotate with the rotatable driving element so that torsional vibrations of the rotatable driving element are transferred to the baffle whereby they are dampened due to viscous interaction between the medium and the baffle.

10. The wind turbine of claim 9, further comprising a gear for drivably linking the baffle to the driving element.

11. The wind turbine of claim 10, wherein the gear comprises a bevel gear.

## Patentansprüche

1. Verwendung einer torsionalen Dämpfungsvorrichtung (106) zum Dämpfen torsionaler Niedrigfrequenzschwingungen mit einer Frequenz unter 10 Hz in einem Übertragungssystem einer Windturbine, wobei die Windturbine einen windgetriebenen Rotor (100) zum Umwandeln von Windenergie in eine mechanische Antriebskraft, einen Stromrichter (102) zum Umwandeln der Antriebskraft in verwertbaren Strom und ein Übertragungssystem zum drehbaren Übertragen der Antriebskraft an den Stromrichter umfasst, wobei das Übertragungssystem mindestens ein drehbares Antriebselement umfasst, wobei ein Zahnrad zwischen dem windgetriebenen Rotor und dem Stromrichter angeordnet ist, wobei sich eine Abgangswelle (114) des Zahnrades mit einer höheren Geschwindigkeit als eine Eingangswelle (112) davon dreht, wobei die torsionale Dämpfungsvorrichtung (106) ein drehbares Trägheitselement aufweist, welches durch das mindestens eine drehbare Antriebselement angetrieben werden kann, und wobei das Trägheitselement derart mit dem mindestens einen drehbaren Antriebselement verbunden ist, dass das Trägheitselement torsionale Schwingungen in dem drehbaren Antriebselement während des Betriebs der Windturbine dämpft, wobei die torsionale Dämpfungsvorrichtung (106) zwischen dem Zahnrad (108) und dem Stromrichter (102) angeordnet ist.

2. Windturbine, welche Folgendes umfasst:
- einen windgetriebenen Rotor (100) zum Umwandeln von Windenergie in eine mechanische Antriebskraft;
- einen Stromrichter (102) zum Umwandeln der Antriebskraft in verwertbaren Strom;
- ein Übertragungssystem zum drehbaren Übertragen der Antriebskraft zu dem Stromrichter, wobei das Übertragungssystem mindestens ein drehbares Antriebselement (104) umfasst;
- ein Zahnrad (108), welches zwischen dem windgetriebenen Rotor und dem Stromrichter angeordnet ist, wobei sich eine Abgangswelle des Zahnrades mit einer höheren Geschwindigkeit als eine Eingangswelle davon dreht, wobei das Übertragungssystem ferner eine torsionale Dämpfungsvorrichtung (106) mit einem drehbaren Trägheitselement umfasst, welches durch das mindestens eine drehbare Antriebselement angetrieben werden kann, und wobei das Trägheitselement derart mit dem mindestens einen drehbaren Antriebselement verbunden ist, dass das Trägheitselement torsionale Schwingungen in dem drehbaren Antriebselement während des Betriebs der Windturbine dämpft, wobei:
- die torsionale Dämpfungsvorrichtung (106) zwischen dem Zahnrad und dem Stromrichter angeordnet ist, und wobei
- die torsionale Dämpfungsvorrichtung (106) zum Dämpfen torsionaler Niedrigfrequenzschwingungen mit einer Frequenz unter 10 Hz konfiguriert ist.

3. Windturbine nach Anspruch 2, wobei das drehbare Trägheitselement durch mindestens ein Dämpfungselement mit elastischen, viskosen oder viskoelastischen Eigenschaften mit dem Antriebselement verbunden ist.

4. Windturbine nach Anspruch 3, wobei das drehbare Trägheitselement ein ringförmiges Element umfasst, welches koaxial mit dem mindestens einen drehbaren Antriebselement angeordnet ist, wobei das ringförmige Element einen Innendurchmesser aufweist, welcher größer als ein Außendurchmesser des Antriebselementes ist, und wobei das Antriebselement mittels des Dämpfungselementes mit dem Trägheitselement verbunden ist, wobei das Dämpfungselement mit einer äußeren Umfangsfläche des Antriebselementes und einer inneren Fläche des ringförmigen Elementes in Kontakt steht oder damit verbunden ist.

5. Windturbine nach einem der Ansprüche 2-4, wobei das Antriebselement eine Rotationsachse aufweist und wobei das drehbare Trägheitselement eine Masse umfasst, welche beweglich in einer Nut in dem Antriebselement untergebracht ist, wobei die Nut nicht parallel zu der Rotationsachse ist.

6. Windturbine nach Anspruch 5, wobei das drehbare Element viskos ist.

7. Windturbine nach Anspruch 5, wobei das drehbare Element fest ist.

8. Windturbine nach einem der Ansprüche 2-4, wobei das drehbare Trägheitselement mindestens ein Pendel umfasst.

9. Windturbine nach Anspruch 2, welche ferner eine Kammer zum Unterbringen eines Mediums mit viskosen Eigenschaften umfasst, und wobei das drehbare Trägheitselement mindestens ein Leitblech umfasst, welches sich in das Medium erstreckt und derart verbunden ist, dass es sich mit dem drehbaren Antriebselement dreht, so dass torsionale Schwingungen des drehbaren Antriebselementes auf das Leitblech übertragen werden, wodurch diese aufgrund der viskosen Interaktion zwischen dem Medium und dem Leitblech gedämpft werden.

10. Windturbine nach Anspruch 9, welche ferner ein Zahnrad zum antreibbaren Verbinden des Leitblechs mit dem Antriebselement umfasst.

11. Windturbine nach Anspruch 10, wobei das Zahnrad ein Kegelrad umfasst.

## Revendications

1. Utilisation d'un dispositif amortisseur de torsion (106) pour amortir les vibrations de torsion à basse fréquence ayant une fréquence inférieure à 10 Hz dans un système de transmission d'une éolienne, l'éolienne comprenant un rotor entraînée par le vent (100) pour convertir l'énergie du vent en une force d'entraînement mécanique, un convertisseur de puissance (102) pour convertir la force d'entraînement en une puissance exploitable, et un système de transmission pour transmettre de manière rotative la force d'entraînement au convertisseur de puissance, le système de transmission comprenant au moins un élément rotatif d'entraînement, un rapport disposé entre le rotor entraîné par le vent et le convertisseur de puissance, dans lequel un arbre de sortie (114) du rapport tourne à une vitesse supérieure à un arbre d'entrée (112) de celui-ci, le dispositif amortisseur de torsion (106) ayant un élément d'inertie rotatif qui peut être entraîné par le au moins un élément d'entraînement rotatif, et l'élément d'inertie étant relié à l'au moins un élément d'entraînement rotatif de manière à ce que l'élément d'inertie amortit les vibrations de torsion dans l'élément d'entraînement rotatif pendant le fonctionnement de l'éolienne, dans lequel le dispositif amortisseur de torsion (106) est disposé entre le rapport (108) et le convertisseur de puissance (102).

2. Éolienne comprenant :
- un rotor d'éolienne (100) pour convertir l'énergie du vent en une force mécanique d'entraînement ;
- un convertisseur de puissance (102) pour convertir la force d'entraînement en puissance exploitable ;
- un système de transmission pour transmettre de manière rotative la force d'entraînement au convertisseur de puissance, le système de transmission comprenant au moins un élément d'entraînement rotatif (104) ;
- un engrenage (108) disposé entre le rotor entraîné par le vent et le convertisseur de puissance, dans lequel un arbre de sortie du rapport tourne à une vitesse supérieure à un arbre d'entrée de celui-ci, dans lequel le système de transmission comprend en outre un dispositif d'amortissement de torsion (106) ayant un élément d'inertie rotatif qui peut être entraîné par le au moins un élément d'entraînement rotatif, et en ce que l'élément d'inertie est relié à l'au moins un élément rotatif d'entraînement de manière à ce que l'élément d'inertie amortit les vibrations de torsion dans l'élément d'entraînement rotatif pendant le fonctionnement de l'éolienne, dans lequel :
- le dispositif d'amortissement de torsion (106) est disposé entre le rapport et le convertisseur de puissance, et dans lequel
- le dispositif d'amortissement de torsion (106) est configuré pour amortir les vibrations de torsion de basse fréquence ayant une fréquence inférieure à 10 Hz.

3. Éolienne selon la revendication 2, dans lequel l'élément d'inertie pouvant tourner est relié à l'élément d'entraînement par au moins un élément d'amortissement ayant des propriétés élastiques, visqueuses ou viscoélastiques.

4. Éolienne selon la revendication 3, dans lequel l'élément d'inertie rotatif comprend un élément annulaire disposé de manière coaxiale par rapport à l'au moins un élément d'entraînement rotatif, l'élément annulaire ayant un diamètre interne supérieur au diamètre extérieur de l'élément d'entraînement, et dans lequel l'élément d'entraînement est relié à l'élément d'inertie par l'intermédiaire dudit élément d'amortissement, l'élément d'amortissement étant en contact ou relié à une surface circonférentielle extérieure de l'élément d'entraînement et à une surface intérieure de l'élément annulaire.

5. Éolienne selon l'une quelconque des revendications 2 à 4, dans lequel l'élément d'entraînement présente un axe de rotation, et dans lequel l'élément d'inertie rotatif comprend une masse logée de manière mobile dans une rainure de l'élément d'entraînement, la rainure étant non-parallèle à l'axe de rotation.

6. Éolienne selon la revendication 5, dans lequel l'élément rotatif est visqueux.

7. Éolienne selon la revendication 5, dans lequel l'élément rotatif est solide.

8. Éolienne selon quelconque des revendications 2 à 4, dans lequel l'élément d'inertie rotatif comprend au moins un pendule.

9. Éolienne selon la revendication 2, comprenant en outre une chambre hébergeant un support
ayant des propriétés visqueuses, et dans lequel l'élément d'inertie rotatif comprend au moins un
déflecteur s'étendant dans le support et étant lié pour tourner avec l'élément d'entraînement rotatif
de sorte que les vibrations de torsion de l'élément d'entraînement rotatif sont transférées au
déflecteur par lequel ils sont freinés en raison de l'interaction entre le milieu visqueux et le déflecteur.

10. Éolienne selon la revendication 9, comprenant en outre un rapport pour lier par entraînement le déflecteur à l'élément d'entraînement.

11. Éolienne selon la revendication 10, dans lequel le rapport comprend un rapport conique.
